# EUROPEAN PATENT SPECIFICATION

(11) **EP 2 663 426 B1**
(45) Date of publication and mention of the grant of the patent: **06.09.2017**
(21) Application number: 12700638.5
(22) Date of filing: 10.01.2012
(51) Int. Cl.: B24C 3/04, B23Q 1/03, B23Q 3/08

(54) **A METHOD AND AN APPARATUS FOR TREATING AT LEAST ONE WORKPIECE**
VERFAHREN UND VORRICHTUNG ZUR BEARBEITUNG MINDESTENS EINES WERKSTÜCKS
PROCÉDÉ ET APPAREIL DE TRAITEMENT D'AU MOINS UNE PIÈCE

(30) Priority: 12.01.2011 EP 11150683
(43) Date of publication of application: 20.11.2013
(73) Proprietor: Sandvik Intellectual Property AB, 811 81 Sandviken (SE); Vapormatt Limited, Rue a Chiens - St. Sampsons Guernsey, GY2 4AG , Channel Islands (GB)
(72) Inventor: EDMAN, Jonny, 125 74 Älvsjö (SE); FRISENHOLM, Lars, Wuxi city 214000 Jiangsu province (CN); ASHWORTH, Robin Stewart, Vale GY3 5EP (GB); ASHWORTH, Terence Ives, Vale GY3 5DX (GB); ASHWORTH, Stewart Ives, deceased (GB)
(86) International application number: PCT/EP2012/050293
(87) International publication number: WO 2012/095411

(56) References cited:
- EP-A1- 0 248 096
- WO-A1-2004/025724
- JP-A- 2007 185 694
- US-A1- 2002 083 938
- US-B1- 6 386 191

## Description

### Technical Field

The present invention relates to an apparatus for treating at least one workpiece, especially a workpiece comprising a cutting insert, the apparatus comprising a casing which at least partially encloses a first region and a second region, the first and second regions being adapted to be in communication with one another by at least one passage, and support means for supporting a carrier adapted to hold the at least one workpiece, the support means being adapted to support the carrier so that the at least one workpiece is positioned in the first region for treatment. Further, the present invention relates to a method for treating at least one workpiece, especially a workpiece comprising a cutting insert, comprising the step of holding the at least one workpiece, and the step of holding the at least one workpiece comprises holding the at least one workpiece by means of a carrier which is, at least partly, positioned in a casing, the casing at least partially enclosing a first region and a second region which are adapted to be in communication with one another by at least one passage, and the at least one workpiece is positioned in the first region for treatment (see for example WO 2004/025724 A1).

### Background of the Invention

When manufacturing cutting inserts, e.g. cutting inserts for cutting titanium, steel, aluminium, castings or other materials, the cutting inserts are often blasted. Blasting, e.g. abrasive blasting, wet blasting or dry blasting, is the operation of propelling a stream of blasting medium, e.g. abrasive material, against a surface of a work-piece under pressure to smooth a rough surface, roughen a smooth surface, shape a surface, or remove surface contaminants or impurities, e.g. cobalt or graphite. When the cutting inserts are surface-coated, blasting may be used to remove one or a plurality of layers from the cutting insert at certain regions. Blasting may also be used for edge radiusing, polishing and honing etc. The cutting inserts may be surface-coated and may be made of cemented carbide, cermet or ceramics, or a part thereof may be made of cemented carbide, cermet or ceramics. However, other materials are also possible. It is efficient to blast several cutting inserts at the same time. To blast several cutting inserts at the same time, a carrier is often used, which has a plurality of seats in the form of compartments or pockets, each seat holding a cutting insert. The carrier is then inserted into a blasting cabinet in which the cutting inserts, held by the carrier, are blasted. During the blasting operation, the cutting inserts are generally subjected to impacts of the blasting material of such magnitude that the cutting inserts must be retained in the seats/pockets by additional retaining means to prevent the cutting inserts from being displaced or leaving the seats. Conventionally, a cover net or grid is provided over the cutting inserts held by a carrier to retain the cutting inserts in the seats while allowing the blasting material to pass through the openings of the cover net to impact the surface of the cutting inserts. Other ways to retain the cutting inserts in their positions in the carrier may be the use of magnets or the use of vertical pins between which the cutting inserts may be retained, or if the cutting inserts have through-holes, the through-holes of the cutting inserts may be engaged by the vertical pins to retain the inserts. If the cutting inserts would simply rest in the seats of the carrier without any cover net or vertical pins, the blast angle would be limited, i.e. the angle at which the blasting medium is propelled to the surface of the cutting insert, as the flow of blasting medium should form an angle of about 90 degrees with the plane of the carrier to avoid dislocating the cutting inserts. However, even with such a blast angle, the freely resting cutting inserts may still be dislocated by the blasting medium.

EP-A1-1 792 691 discloses a method for manufacturing surface-coated cutting inserts including the step of clamping and holding one surface coated cutting insert with a pair of rotary shafts which are rotatable around an axis and the step of jetting an abrasive fluid to the surface of the cutting insert while rotating the cutting insert.

EP-A1-1 172 177 describes a dry surface treating apparatus including a rotating tubular barrel having a porous peripheral surface for accommodating a work piece, to treat the surface of the work piece while rotating the tubular barrel. The work piece may be blasted while being accommodated in the tubular barrel.

EP-A1-0 248 096 discloses a method and an apparatus for grading a work piece by holding and rotating the work piece around two axes by means of a holder having clamps.

### The Object of the Invention

The inventors of the present invention have identified problems in prior art with regard to retaining cutting inserts in the carrier by means of a cover net or vertical pins. The vertical pins and the bars of the cover net cover will cover portions of the surface of the cutting inserts and these portions will consequently not be treated, e.g. blasted, or at least not satisfactory blasted, and the cutting inserts will be irregularly treated during the blasting operation. One way to compensate for this may be to displace the cover net, e.g. by rotation, after a first blasting and subsequently perform a second blasting. However, the inventors have found that this is a time consuming operation, and the cutting inserts may still be irregularly treated and not evenly treated to a satisfactory degree. It has also been found that the above-identified problems arise for other surface treatments of cutting inserts, or other items, e.g. shot peening etc.

Further, the inventors of the present invention have identified the following problems with regard to holding workpieces by means of vertical pins: the vertical pins should be thin, and consequently, even small amount of wear makes the pins ineffective. The vertical pins are preferably used for workpieces having a through-hole. However, all workpieces do not have such a through-hole. When a vertical pin is inserted into a through-hole of a workpiece in order to hold it, the insert may rotate which may lead to inconsistent processing, which is an enhanced problem with regard to edge radiusing. When the workpieces do not have any through-hole, several peripheral pins are needed to hold the periphery of the workpiece, and these peripheral pins may be even more susceptible to wear effects. Peripheral pins must be slightly shorter than the depth of insert if they are positioned at a cutting edge. Peripheral pins must be placed at specific positions and have a specific length, and as a consequence, a greater range of different carriers or trays is required.

Further, the inventors of the present invention have identified the following problems with regard to holding workpieces by means of magnets: the holding force of regular magnets can be too low. The holding force is improved by using high-strength magnets, but workpieces may have to be subsequently demagnetized. Magnets may have to be protected with a wear surface, which per se reduces the holding force. The use of multiple magnets together can be troublesome as the magnetic flux is difficult to control. The use of magnets makes it difficult for the operator to actively displace or move the workpieces during treatment when this is required. The use of magnet carriers or individual magnets can restrict the flow of process fluids away from the part being processed, which may disturb the processing and create a backwash which acts to lift the workpieces out of the carrier. Magnet holding devices attract process residues, e.g. old carbide dust etc, which tend to stick to holding device surfaces and may compromise final cleanliness levels achievable through the rinsing and/or drying stage.

The object of the present invention is thus to improve the treatment of workpieces, especially cutting inserts. A further object of the present invention is to improve the blasting of workpieces, especially workpieces in the form of cutting inserts. Another object is to provide workpieces that are regularly treated, especially regularly treated by a blasting operation.

### Summary of the Invention

At least one of the above-mentioned objects of the present invention is attained by providing an apparatus for treating at least one workpiece, the apparatus comprising the features of claim 1. By the present invention, the at least one workpiece is efficiently and firmly held in a correct position in the carrier, without the aid of any magnets or members covering the workpiece and thus without any members blocking the blasting medium or media, or any other medium for treatment, and consequently, the workpieces are regularly treated during the wet or dry blasting operation, or any other treatment operation. A greater portion of the surface of the workpiece may be blasted at the same time. There is no need for performing a second subsequent blasting. Since the workpieces can be held without any means that need to cover the workpieces, the rate of the blasting operation is improved and the productivity is improved and manufacturing costs are reduced. Further, the blast angle, i.e. the angle at which the blasting medium is propelled to the surface of the workpiece, is not limited. Surface portions of the workpiece which have a substantially vertical extension when the workpiece is held by the carrier are blasted in a more efficient way by the present invention. Further, the inventors of the present invention have also found that the present invention is advantageous for holding workpieces during other treatments, especially treatments when a medium is propelled or jetted to a surface of the workpiece, e.g. shot peening, rinsing, drying, or other treatments, e.g. additional treatments following the blasting as disclosed in more detail below. The apparatus of the present invention is especially advantageous for cutting inserts. Thus, by the present invention, the treatment, such as blasting, shot peening, rinsing or drying, of workpieces, especially cutting inserts, is improved. By the present invention, the use of vertical pins, a cover net or magnets to hold workpieces is avoided, and consequently, the above-mentioned drawbacks of these prior art holding methods are overcome. The casing may enclose the first region and the second region.

By guiding a flow of medium or media from the first region to the second region through the at least one passage, said pressure difference is created in an efficient way, whereby the at least one workpiece is efficiently held in a correct position in the carrier, and the treatment of the workpiece is further improved. By the present invention, the medium or media used during the treatment is efficiently evacuated or discharged from the first region to the second region. Further, by means of the present invention, one and the same system may be arranged to hold the workpiece and to take care of the medium used for treating the work-piece. Two separated systems, which may be the case in prior art, i.e. one system for holding the workpiece by means of vacuum, or a negative pressure, and another system for taking care of the medium used for treating the workpiece, are not required by means of the present invention. Thus, an improved apparatus for treating at least one workpiece, which is less complex in its structure, is provided.

According to an advantageous embodiment of the apparatus according to the present invention, the support means is adapted to support a carrier adapted to hold at least one workpiece comprising a cutting insert. Advantageously, the support means is adapted to support a carrier adapted to hold a plurality of workpieces, e.g. a plurality of cutting inserts. The support means may be in the form of one or a plurality of supports. The differential pressure creating means may be in the form differential pressure creating equipment. The differential pressure creating means may comprise one or a plurality of fans or blowers. The differential pressure creating means may comprise one or a plurality of valves and/or pumps. The apparatus may comprise the carrier. The carrier may be made of any suitable material which may satisfactory withstand the treatment environment.

According to an advantageous embodiment of the apparatus according to the present invention, the differential pressure creating means are adapted to create a first pressure in the second region in order to create said pressure difference. The pressure of the first region may be at atmospheric pressure, or at another pressure. This is an efficient way to create said pressure difference, whereby the at least one workpiece is efficiently held in a correct position in the carrier, and the treatment of the workpiece is further improved.

According to a further advantageous embodiment of the apparatus according to the present invention, the differential pressure creating means are adapted to create a second pressure in the first region in order to create said pressure difference. The pressure of the second region may be at atmospheric pressure, or at another pressure. This is an efficient way to create said pressure difference, whereby the at least one workpiece is efficiently held in a correct position in the carrier, and the treatment of the workpiece is further improved.

According to another advantageous embodiment of the apparatus according to the present invention, the casing is provided with an outlet, and in that the differential pressure creating means are adapted to evacuate a medium or media from the second region via the outlet in order to, at least partly, create said pressure difference. This is an efficient way to create said pressure difference, whereby the at least one workpiece is efficiently held in a correct position in the carrier, and the treatment of the workpiece is further improved. Further, at the same time the pressure difference is attained by this embodiment, the medium or media used during the treatment or treatments and fed to the second region may be evacuated from the second region. The medium or media evacuated from the second region may comprise a fluid or fluids, e.g. a liquid or liquids, gas, e.g. air, or a gas mixture, solids, a slurry and/or medium or media used during and for the treatment, or mixtures thereof.

According to yet another advantageous embodiment of the apparatus according to the present invention, the differential pressure creating means comprise suction means for drawing out the medium or media of the second region via the outlet in order to, at least partly, create said pressure difference. This is an efficient way to create said pressure difference, whereby the at least one workpiece is efficiently held in a correct position in the carrier, and the treatment of the workpiece is further improved. Further, at the same time the pressure difference is attained by this embodiment, the medium or media used during the treatment and fed to the second region may be drawn from the second region. The suction means may be in the form of suction equipment, and may include at least one pump.

According to still another advantageous embodiment of the apparatus according to the present invention, the casing is provided with an inlet, and the differential pressure creating means are adapted to feed a medium or media to the first region via the inlet in order to, at least partly, create said pressure difference. This is an efficient way to create said pressure difference, whereby the at least one workpiece is efficiently held in a correct position in the carrier, and the treatment of the workpiece is further improved. The medium or media fed to the first region may comprise a fluid or fluids, e.g. a gas or a gas mixture, e.g. air, or may even be liquid or solid media and/or medium or media used during the treatment.

According to another advantageous embodiment of the apparatus according to the present invention, the support means is adapted to support a carrier having at least one seat for holding a workpiece, the seat being provided with at least one through-hole, and the support means is adapted to support the carrier such that the at least one through-hole of the carrier is in communication with the second region and the at least one passage. This is an efficient way to create said pressure difference, whereby the at least one workpiece is efficiently held in a correct position in the carrier, and the treatment of the workpiece is improved.

According to a further advantageous embodiment of the apparatus according to the present invention, the support means is adapted to support a carrier having at least one through-hole, the support means is adapted to support the carrier such that the at least one through-hole of the carrier is in communication with the first and second regions and the at least one passage, and the differential pressure creating means are adapted to guide a flow of medium or media through the at least one through-hole of the carrier. This is an efficient way to create said pressure difference, whereby the at least one workpiece is efficiently held in a correct position in the carrier, and the treatment of the workpiece is further improved. By this embodiment, the medium or media used during the treatment is efficiently discharged or evacuated from the first region to the second region and subsequently discharged from the second region. Further, the environment in the first region is improved.

According to another advantageous embodiment of the apparatus according to the present invention, the support means is adapted to support a carrier having at least one seat for holding a workpiece, the seat being provided with the at least one through-hole. The seat may be a flat surface, a pocket or a compartment, i.e. the carrier may be a flat plate or a may be provided with at least one pocket, defined by walls, for example. By providing said through-hole at the seat, the discharge or evacuation of the medium or media, used during the treatment, from the first region is further improved. A seat may be provided with a plurality of through-holes and each through-hole may have various shapes.

According to yet another advantageous embodiment of the apparatus according to the present invention, the apparatus has at least one base for supporting the apparatus, the base being adapted to rest on a substantially horizontal surface, and the support means is adapted to support the carrier so that the plane of the carrier is substantially parallel to said substantially horizontal surface. By this embodiment, also the force of gravity acting on the workpiece contributes to force the workpiece toward the carrier, whereby the at least one workpiece is efficiently held in a correct position in the carrier, and the treatment of the workpiece is improved. Alternatively, the support means may be adapted to support the carrier so that the plane of the carrier forms an angle with said substantially horizontal surface.

According to still another advantageous embodiment of the apparatus according to the present invention, the first region is provided with workpiece treating means for treating the at least one workpiece held by the carrier. The workpiece treating means may be in the form of workpiece treating equipment.

According to yet an advantageous embodiment of the apparatus according to the present invention, the workpiece treating means are arranged to propel or jet a medium to a surface of the at least one workpiece held by the carrier to treat the at least one workpiece.

According to an advantageous embodiment of the apparatus according to the present invention, the workpiece treating means comprise blasting means for propelling a blasting medium to a surface of the at least one workpiece held by the carrier. The blasting means may be adapted for wet and/or dry blasting. The innovative way of holding the workpiece in a correct position is advantageous for a treatment including blasting as the workpiece during blasting is subjected to relatively great forces. The blasting medium may be any blasting medium known to the skilled person. The blasting means may be in the form of blasting equipment. The blasting means may comprise one or a plurality of blast nozzles. The blasting means may comprise one or a plurality of blast guns. The blasting means may comprise one or a plurality of turbines. The blasting means may comprise vacuum-powered blasting means.

According to a further advantageous embodiment of the apparatus according to the present invention, the workpiece treating means comprise rinsing means for jetting a rinsing medium to a surface of the at least one workpiece held by the carrier. The innovative way of holding the workpiece in a correct position is advantageous for a treatment including rinsing. For example, the rinsing medium or media can be provided at a higher pressure. The rinsing medium may be a fluid, e.g. water, or any fluid mixture suitable for rinsing and known to the skilled person. The rinsing means may be in the form of rinsing equipment. The rinsing means may comprise one or a plurality of rinsing nozzles.

According to another advantageous embodiment of the apparatus according to the present invention, the workpiece treating means comprise shot peening means for propelling a peening medium to a surface of the at least one workpiece held by the carrier. The shot peening means may be adapted for wet and/or dry shot peening. The innovative way of holding the workpiece in a correct position, is advantageous for a treatment including shot peening. The shot peening means may be adapted for wet or dry shot peening. The peening medium may be any peening medium known to the skilled person. The shot peening means may be in the form of shot peening equipment. The shot peening means may comprise one or a plurality of shot peening nozzles. The shot peening means may comprise one or a plurality of shot peening guns.

According to yet another advantageous embodiment of the apparatus according to the present invention, the workpiece treating means comprise drying means for guiding a drying medium to a surface of the at least one workpiece held by the carrier. The innovative way of holding the workpiece in a correct position, is advantageous for a treatment including drying. By this embodiment the at least one workpiece is efficiently and quickly dried, which is important if the workpiece comprises an insert, e.g. a cemented carbide insert, which is sensitive to corrosion, e.g. when being wet by the rinsing medium. The drying medium may be a gas or a gas mixture, e.g. air. The drying means may be in the form of drying equipment. The drying means may comprise one or a plurality of drying nozzles.

According to still another advantageous embodiment of the apparatus according to the present invention, the second region is provided with at least one fluid nozzle for jetting a fluid or a fluid mixture to the at least one passage. The fluid nozzle may be a gas nozzle and the fluid or fluid mixture may be a gas or gas mixture. The gas or gas mixture may be air or any other suitable gas or gas mixture known to the skilled person. By this embodiment, an efficient drying of the workpiece is provided. By the jetted fluid of the fluid nozzle and said pressure difference, it is possible to elevate the workpiece in a controlled manner from its physical contact with the carrier, and thus exposing the surface of the workpiece which rests against the carrier to drying medium. Thus, the bottom side of the workpiece will be efficiently dried as well. By this embodiment, also an efficient rinsing of the workpiece is provided, and the surface of the workpiece which rests against the carrier may be exposed to rinsing medium. When rinsing, the at least one fluid nozzle may be adapted to jet a fluid or a fluid mixture comprising a gas or gas mixture, or a liquid or liquid mixture, or a mixture thereof, i.e. a mixture of gas and liquid. The at least one fluid nozzle may be a plurality of fluid nozzles. The at least one fluid nozzle may be movable in relation to the support means, and thus also in relation to the carrier and the workpieces, to jet the fluid or the fluid mixture to all workpieces held by the carrier. The at least one fluid nozzle may be movable in relation to the casing of the apparatus. The support means and the carrier may be movable in relation to the casing of the apparatus. Alternatively, the at least one fluid nozzle may be adapted to jet the fluid or the fluid mixture to all the workpieces held by the carrier without being movable in relation to the support means.

According to an advantageous embodiment of the apparatus according to the present invention, where the second region is provided with the at least one fluid nozzle, the apparatus comprises nozzle controlling means for controlling the fluid or fluid mixture jetted from the fluid nozzle, and the nozzle controlling means and/or the differential pressure creating means are/is adapted to balance the pressure difference force acting on the at least one workpiece and the fluid jetting force acting on the at least one workpiece. The nozzle controlling means may be in the form of nozzle controlling equipment. The nozzle controlling means may comprise a nozzle controlling device for controlling the rate of the fluid flow of the fluid nozzle and/or the size of the orifice of the fluid nozzle.

However, the workpiece treating means may comprise other workpiece treating means, e.g. means for washing at low pressure, means for solvent cleaning, means for solvent drying, means for polishing, means for grinding, means for brushing, means for deburring, means for surface finishing, means for lapping, means for texturing, means for roughening, means for cleaning, means for striping, means for etching, means for de-coating, means for heat and other scale removal, means for honing etc. A plurality of the different workpiece treating means may be provided in the same first region. The different workpiece treating means may be provided in different first regions, and the support means may be adapted to move the carrier between the plurality of first regions, e.g. automatically, e.g. by conveyor means, e.g. a conveyor belt, or the carrier may be manually moved between the plurality of first regions. Some examples are given below in the detailed description of embodiments.

The carrier may be adapted to hold at least one workpiece in the form of an item, component or object. According to an advantageous embodiment of the apparatus according to the present invention, the support means is adapted to support a carrier which is adapted to hold at least one workpiece comprising a cutting insert. However, the carrier may be adapted to hold other workpieces, e.g. turbine blades, medical components, small sized machined or formed components or parts, electronic components in general, striping and etching silicon wafers during IC manufacture, circuit boards during manufacture (e.g. for de-smearing, deoxidizing or through-hole de-burring), circuit boards during repair, composite plastic parts, high precision castings, high precision machined parts, etching glass components, medical implants (e.g. teeth, joint, heart components, pacemakers etc), attachments or fixings (e.g. nuts and bolts, e.g. prior to plating or drying decontamination or peening operations), sporting equipment etc.

According to a further advantageous embodiment of the apparatus according to the present invention, the casing has a first chamber and a second chamber, the first and second chambers being adapted to be in communication with one another by the at least one passage, and the first chamber at least partially encloses the first region and the second chamber at least partially encloses the second region. Advantageously, at least one of the first and second chambers is sufficiently gas-proof or air tight to maintain or hold a pressure. Advantageously, at least the second chamber is sufficiently gas-proof to maintain or hold a pressure. Advantageously, the first and second chambers are sufficiently gas-proof to maintain or hold a pressure. The first chamber may enclose the first region and the second chamber may enclose the second region.

At least one of the above-mentioned objects of the present invention is also attained by providing a method for treating at least one workpiece, comprising the features of claim 13. By the method according to the present invention, the at least one work-piece is efficiently and firmly held in a correct position in the carrier, without the aid of any members covering the workpiece and thus without any members blocking the blasting medium or media, and consequently, the workpieces are regularly treated during the blasting operation, or any other treatment operation. By guiding a flow of medium or media from the first region to the second region through the at least one passage, said pressure difference is created in an efficient way, whereby the at least one workpiece is efficiently held in a correct position in the carrier, and the treatment of the workpiece is further improved. Further positive effects of the method according to the present invention correspond to the above-mentioned technical effects mentioned in connection with the apparatus according to the present invention. The casing may enclose the first region and the second region.

According to an advantageous embodiment of the method according to the present invention, said pressure difference is, at least partly, created by creating a first pressure in the second region.

According to a further advantageous embodiment of the method according to the present invention, said pressure difference is, at least partly, created by creating a second pressure in the first region.

According to another advantageous embodiment of the method according to the present invention, said pressure difference is, at least partly, created by evacuating a medium or media contained in the second region via an outlet of the casing.

According to yet another advantageous embodiment of the method according to the present invention, said pressure difference is, at least partly, created by drawing out the medium or media of the second region via the outlet of the casing.

According to still another advantageous embodiment of the method according to the present invention, said pressure difference is, at least partly, created by feeding a medium or media to the first region via an inlet of the casing.

According to another advantageous embodiment of the method according to the present invention, the step of holding the at least one workpiece comprises supporting a carrier having at least one seat for holding a workpiece, the seat being provided with at least one through-hole, such that the at least one through-hole of the carrier is in communication with the second region and the at least one passage.

According to a further advantageous embodiment of the method according to the present invention, the step of holding the at least one workpiece comprises supporting a carrier, having at least one through-hole, such that the at least one through-hole of the carrier is in communication with the first and second regions and the at least one passage, and guiding a flow of medium or media through the at least one through-hole of the carrier.

According to another advantageous embodiment of the method according to the present invention, the step of holding the at least one workpiece comprises supporting a carrier, having at least one seat for holding a workpiece, the seat being provided with the at least one through-hole, such that the at least one through-hole of the seat is in communication with the first and second regions and the at least one passage.

According to yet another advantageous embodiment of the method according to the present invention, the step of holding the at least one workpiece comprises holding the at least one workpiece vertically on top of the carrier or vertically above the carrier. By this embodiment, also the force of gravity acting on the workpiece contributes to force the workpiece toward the carrier, whereby the at least one workpiece is efficiently held in a correct position in the carrier, and the treatment of the workpiece is improved. The apparatus may have at least one base for supporting the apparatus, the base being adapted to rest on a substantially horizontal surface, and the step of holding the at least one workpiece may comprise supporting the carrier so that the plane of the carrier is substantially parallel to said substantially horizontal surface. Alternatively, the carrier may be supported so that the plane of the carrier forms an angle with said substantially horizontal surface.

According to yet another advantageous embodiment of the method according to the present invention, the method comprises the step of treating a surface of the at least one workpiece by propelling or jetting a medium to the surface of the at least one workpiece held by the carrier.

According to still another advantageous embodiment of the method according to the present invention, the method comprises the step of blasting a surface of the at least one workpiece, and the step of blasting comprises propelling a blasting medium to the surface of the at least one workpiece held by the carrier.

However, the method may comprise other steps of treatment, e.g. washing at low pressure, solvent cleaning, solvent drying, polishing, grinding, brushing, deburring, surface finishing, lapping, texturing, roughening, cleaning, striping, etching, de-coating, heat and other scale removal and/or honing etc.

According to an advantageous embodiment of the method according to the present invention, the method comprises the step of rinsing a surface of the at least one workpiece, and the step of rinsing comprises jetting a rinsing medium to the surface of the at least one workpiece held by the carrier.

According to a further advantageous embodiment of the method according to the present invention, the method comprises the step of shot peening the at least one workpiece, and the step of shot peening comprises propelling a peening medium to a surface of the at least one workpiece held by the carrier.

According to another advantageous embodiment of the method according to the present invention, the method comprises the step of drying the at least one workpiece, and the step of drying comprises guiding a drying medium to a surface of the at least one workpiece held by the carrier.

According to yet another advantageous embodiment of the method according to the present invention, the step of drying and/or rinsing the at least one workpiece comprises jetting a fluid or a fluid mixture from a fluid nozzle to the at least one passage. Advantageously, the fluid or fluid mixture may be jetted from the fluid nozzle to the at least one passage in a substantially upward direction. However, other suitable directions are possible. The fluid or fluid mixture may comprise a gas or gas mixture, or a liquid or liquid mixture, or a mixture thereof, i.e. a mixture of gas and liquid. When drying, the fluid or fluid mixture is advantageously a gas or a gas mixture.

According to still another advantageous embodiment of the method according to the present invention, the step of drying the at least one workpiece comprises controlling the fluid or fluid mixture jetted from the fluid nozzle and/or said pressure difference to balance the pressure difference force acting on the at least one workpiece and the fluid jetting force acting on the at least one workpiece.

According to an advantageous embodiment of the method according to the present invention, the at least one workpiece, which is treated, comprises a cutting insert.

According to a further advantageous embodiment of the method according to the present invention, the casing has a first chamber and a second chamber, the first and second chambers being adapted to be in communication with one another by the at least one passage, and the first chamber at least partially encloses the first region and the second chamber at least partially encloses the second region. The first chamber may enclose the first region and the second chamber may enclose the second region.

In the above disclosed embodiments of the apparatus and the method according to the present invention, the first chamber may correspond to the first region, and the second chamber may correspond to the second region.

Positive technical effects of the method according to the present invention, and its embodiments, correspond to the above-mentioned technical effects mentioned in connection with the apparatus according to the present invention, and its embodiments.

The above-mentioned features and embodiments of the method and the apparatus, respectively, may be combined in various possible ways providing further advantageous embodiments.

Further advantageous embodiments of the method and apparatus, respectively, according to the present invention and further advantages with the present invention emerge from the detailed description of embodiments.

### Brief Description of the Drawings

The present invention will now be described, for exemplary purposes, in more detail by way of embodiments and with reference to the enclosed drawings, in which:
- Fig. 1: is a schematic top view of an embodiment of a carrier having a plurality of pockets for cutting inserts;
- Fig. 2: shows the section A-A of Fig. 1;
- Fig. 3: is a schematic top view of the carrier shown in Fig. 1 provided with a cutting insert in each pocket;
- Fig. 4: shows the section B-B of Fig. 3;
- Fig. 5: is a schematic top view of a prior art carrier having a plurality of pockets provided with cutting inserts and a prior art cover net covering the cutting inserts;
- Fig. 6: shows the section C-C of Fig. 5;
- Fig. 7: is a schematic partly cutaway view illustrating aspects of the apparatus according to the present invention;
- Fig. 8: is a schematic partial view illustrating some further aspects of the apparatus according to the present invention;
- Fig. 9: is a schematic partial view illustrating yet further aspects of the apparatus according to the present invention;
- Fig. 10: is a schematic cutaway view illustrating further aspects of the apparatus according to the present invention;
- Fig. 11: is a schematic view illustrating more aspects of the apparatus according to the present invention;
- Fig. 12: is a flow chart illustrating aspects of the method according to the present invention; and
- Fig. 13: is a flow chart illustrating further aspects of the method according to the present invention.

### Detailed Description of Preferred Embodiments

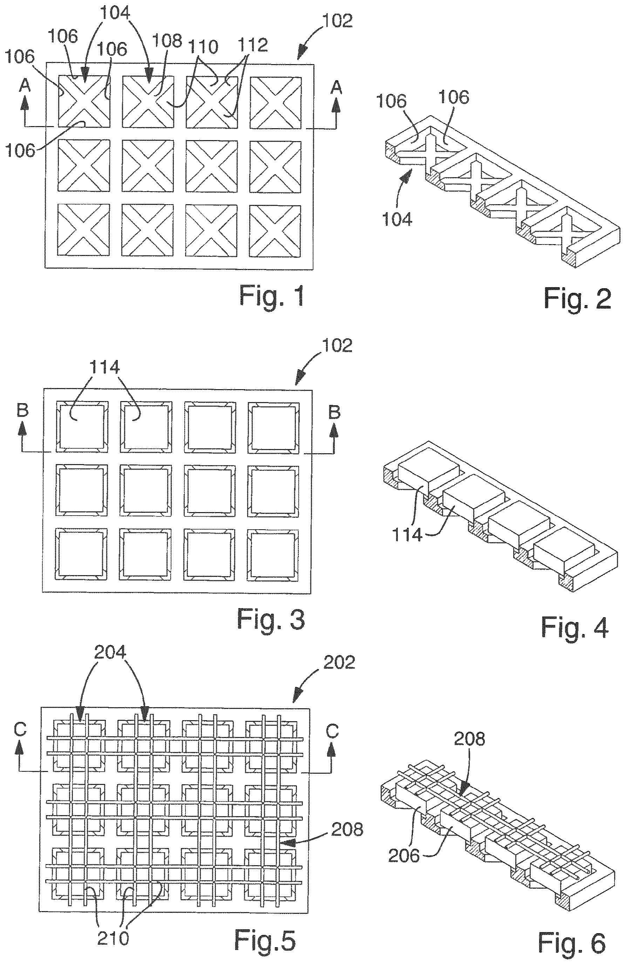

Fig. 1 schematically shows an embodiment of a carrier 102 having a plurality of seats in the form of pockets 104 for cutting inserts to be treated, or any other component to be treated. Each pocket 104 is defined by four side walls 106 and a bottom wall 108 which is provided with a plurality of through-holes 110 defined by the side walls 106 and a plurality of interconnected bars 112. Fig. 2 shows the section A-A of Fig. 1. Fig. 3 schematically shows the carrier shown in Fig. 1 but now provided with a cutting insert 114 in each pocket 104, and Fig. 4 shows the section B-B of Fig. 3. The apparatus and the method according to the present invention may use the carrier shown in Figs. 1-4. However, the apparatus and the method according to the present invention may use other various carriers. The carrier may correspond to the carrier of Figs. 1-4 but may have only one pocket, fewer pockets or more pockets than in Figs. 1-4. The through-holes may have various designs. The general shape of the carrier does not need to be rectangular, but may have any other shape. The carrier may for example comprise a flat plate, where any position at the surface of the plate may constitute a seat for a cutting insert. The carrier may comprise a flat plate with one or a plurality of through-holes. The carrier may comprise a plate or tray provided with shallow recesses forming seats or pockets for receiving cutting inserts, where each recess may be provided with one or a plurality of through-holes. The carrier may have a plurality of seats, each provided with a central through-hole, and may be adapted to hold cutting inserts with an opening or without an opening. Several kinds of carriers are used in prior art and are known to the skilled person and thus not discussed in more detail.

Fig. 5 schematically shows a prior art carrier 202 having a plurality of pockets 204 provided with cutting inserts 206 and a prior art cover net 208 covering the cutting inserts 206. Fig. 6 shows the section C-C of Fig. 5. The cover net 208 is formed by a plurality of bars 210. As a result of the apparatus and method according to the present invention, the prior art cover net 208 may be disposed of, which will be disclosed hereinafter.

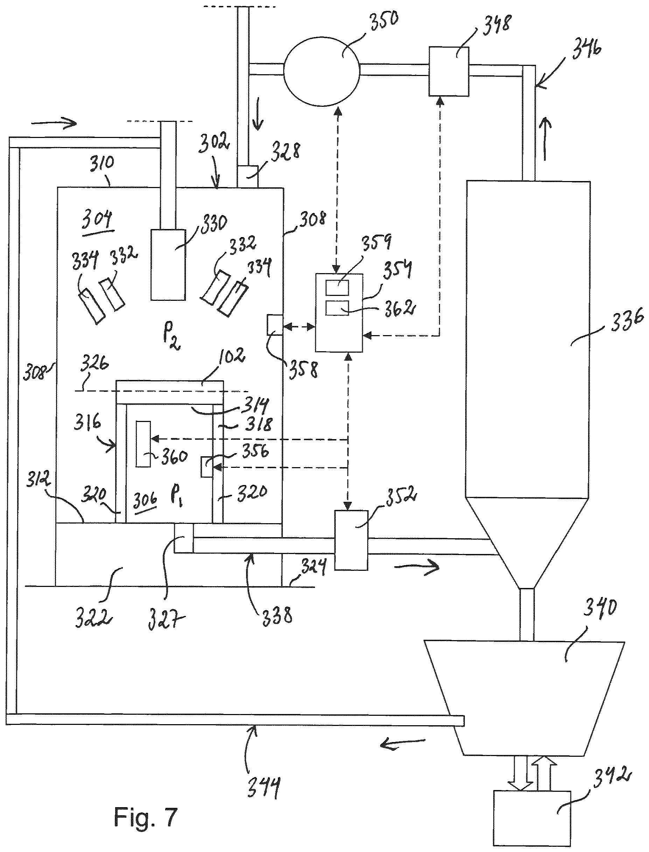

Fig. 7 schematically illustrates aspects of the apparatus according to the present invention by means of an embodiment of the apparatus according to the present invention for treating a plurality of workpieces. In the following disclosure, the workpieces are in the form of cutting inserts. However, the workpieces may be in the form of other items as disclosed above. The apparatus comprises a casing 302, e.g. in the form of a cabinet, enclosing a first region 304 and a second region 306. The casing 302 may have a first chamber 304 and a second chamber 306, where the first chamber 304 may enclose the first region 304 and the second chamber 306 may enclose the a second region 306. The casing 302 may be sufficiently gas-proof to maintain or hold a pressure. Each of the first and second chambers 304, 306 may be sufficiently gas-proof or air tight to maintain or hold a pressure, and may be pressurized. The casing 302 may have a plurality of side walls 308, e.g. four side walls 308 (only two side walls are shown in Fig. 7), a top wall 310 and a bottom wall 312. One of the side walls 308 may include a door for providing access to the inside of the casing 302. The first and second regions 304, 306, as well as the first and second chambers 304, 306, are adapted to be in communication with one another by a passage 314. In fig. 7, only one passage is present, but the apparatus may include a plurality of passages. The apparatus comprises support means 316 which may include a tubular support 318 which has a plurality of vertically extending side walls 320, e.g. four side walls 320 (only two side walls of the support are shown in Fig. 7) and may have a rectangular cross-section, or any other cross-section. The tubular support 318 may also have only one vertically extending side wall and a circular or elliptic cross-section, or any other shape of the cross-section. The support may also have a funnel shape. At one end, the side walls 320 of support 318 are mounted to the bottom wall 312 of the casing 302 and at the other end, the side walls 320 of the support 318 define said passage 314 and are adapted to support a carrier 102, e.g. as shown in Figs 1-4, holding cutting inserts 114 in the pockets 104. Thus, the side walls 320 of the support 318, the bottom wall 312 of the casing 302 and the carrier 102 define or enclose the second chamber 306. The side walls 308, the top wall 310 and the bottom wall 312 of the casing 302 together with side walls 320 of the support 318 and the carrier 102 define the first chamber 304. Thus, the first and second chambers 304, 306 may have the carrier 102 as a common wall.

Alternatively, the casing may have only a single chamber, and the support means 316 may comprise a plurality of vertical rods or bars 320, e.g. four bars, which may be spaced apart. For example, the vertical bars 320 may be positioned at positions corresponding to the positions of the corners of the side walls of a tubular support 318 having a rectangular cross-section. Other support means for a casing having only one chamber are possible. A casing, having only one chamber, may still enclose a first region 304 and a second region 306 as disclosed above.

The support 318 is adapted to support the carrier 102 so that the cutting inserts 114 of the carrier 102 are positioned in the first region/chamber 304 for treatment. The apparatus may have a base 322 for supporting the apparatus, and the base 322 is adapted to rest on a substantially horizontal surface 324, e.g. a floor. The second chamber 306 may be positioned between the passage 314 and the base 322.The support 318 may be adapted to support the carrier 102 so that the plane 326 of the carrier 102 is substantially parallel to said substantially horizontal surface 324. The second chamber 306 is provided with an outlet 327 which may be located at the bottom wall 312 of the casing 302, and the first chamber 304 is provided with an inlet 328 which may be located at the top wall 310 of the casing 302.

The passage 314 is adapted to be in communication with both the first chamber/region and the second chamber/region 304, 306 when the carrier 102 is supported by the support 318, and the support 318 may be adapted to support the carrier 102 such that the through-holes 110 of the carrier 102 is in communication with the first and second chambers/regions 304, 306 and passage 314.

The first chamber/region 304 may be provided with workpiece treating means for treating the cutting inserts 114 held by the carrier 102. The workpiece treating means may be arranged to propel or jet a medium to a surface of the at least one workpiece 114 held by the carrier 102 to treat the at least one workpiece. The workpiece treating means may comprise blasting means comprising a blast nozzle 330 for propelling a blasting medium to a surface of the cutting inserts 114 held by the carrier 102. Various types of blasting media are known to the skilled person. The workpiece treating means may comprise rinsing means comprising a plurality of rinsing nozzles 332 for jetting a rinsing medium, e.g. water, e.g. with solvent addition, or other rinsing fluid or liquid, to a surface of the cutting inserts 114 held by the carrier 102. The workpiece treating means may comprise drying means comprising drying nozzles 334 for guiding a drying medium, e.g. a gas or a gas mixture, e.g. air, to a surface of the cutting inserts 114 held by the carrier 102. Instead of blasting means, the workpiece treating means may comprise shot peening means, e.g. for dry or wet peening, for propelling a shot peening medium to a surface of the at least one workpiece held by the carrier, and/or other work-piece treating means. Further components and units of the workpiece treating means for performing each treatment are well known to the skilled person and thus not further discussed in detail. The media of each treatment may be guided from the first chamber 304 via the through-holes 110 or the carrier 102 and the passage 314 to the second chamber 306. From the second chamber 306, the media of each treatment, or mixtures thereof, are discharged from the second chamber 306 via the outlet 327 of the second chamber 306 to a separator 336 to which the outlet 327 may be connectable via a conduit 338. In the separator 336, gas is separated from solid and liquid material at least partly by way of gravity, in ways known to the skilled person, and the gas is guided upward and solid and liquid material is guided downward to a receptacle 340 which in turn is connected to a filter system 342 for treating the solid and liquid material and processing the material to suitable blasting medium in ways known to the skilled person. The processed blasting medium is led back to the blast nozzle 330 by a conduit 344 in ways known to the skilled person and thus not discussed in more detail. The separator 336 may be connected to the inlet 328 of the first chamber 304 via a gas conduit 346 provided with a gas valve 348 and a fan 350. The gas separated in the separator 336 may thus be guided back the first chamber 304 via the conduit 346.

The apparatus comprises differential pressure creating means for creating a pressure difference P₂-P₁ between the first region 304 and the second region 306, and between the first chamber 304 and the second chamber 306, the pressure P₁ of the second chamber/region 306 being lower than the pressure P₂ of the first chamber/region 304, to force the cutting inserts 114 toward the carrier 102. The differential pressure creating means may comprise the gas valve 348, the fan 350 and the suction means, such as a suction unit 352, e.g. a fan, a pump or valve means. The suctions unit 352 may be adapted to draw or suck out the medium or media of the second chamber 306 via the outlet 327. The media drawn out of the second chamber 306 may be blasting media, rinsing media, drying medium, or a mixture thereof. The fan 350 may be adapted to feed gas or a gas mixture, e.g. air, to the first chamber 304 via the inlet 328. Further, the differential pressure creating means may comprise a control unit 354 connected to the suction unit 352, the gas valve 348 and the fan 350. The control unit 354 may also be connected to pressure measuring means, e.g. in the form of a first pressure gauge 356 for measuring the pressure P₁ in the second chamber 306 and a second pressure gauge 358 for measuring the pressure P₂ in the first chamber 304. The control unit 354 may comprise processing means 359, e.g. a CPU. The control unit 354 may be adapted to control the suction unit 352, the gas valve 348 and the fan 350 based on the data and measurements of the pressure gauges 356, 358.

The differential pressure creating means may be adapted to create a first pressure P₁ in the second chamber 306 in order to create said pressure difference, or may be adapted to create a second pressure P₂ in the first chamber 304 in order to create said pressure difference. However, the second pressure P₂ in the first chamber 304 may also correspond to the atmospheric pressure. The control unit 354 may be adapted to control the suction unit 352 to evacuate media contained in the second chamber 306 via the outlet 327 in order to, at least partly, create said pressure difference. The control unit 354 may be adapted to control the fan 350 and/or the gas valve 348 to feed a medium or media to the first chamber 304 to, at least partly, create said pressure difference. The control unit 354 may be adapted to control the suction unit 352, the fan 350 and/or the gas valve 348 to guide a flow of medium or media from the first chamber 304 to the second chamber 306 through the through-holes 110 of the carrier 102 and the passage 314 in order to, at least partly, create said pressure difference.

Further, the second chamber 306 is provided with at least one fluid nozzle 360 for jetting a fluid or a fluid mixture, e.g. liquid, such as water, or gas, such as air, to the passage 314, the through-holes 110 of the carrier 102 and to the bottom side of the cutting inserts 114. The control unit 354 may comprise nozzle controlling means 362 for controlling the fluid or the fluid mixture jetted from the fluid nozzle 360, and the nozzle controlling means and/or the differential pressure creating means may be adapted to balance the pressure difference force acting on each cutting inserts 114 and the fluid jetting force acting on each cutting inserts 114. By balancing the pressure difference force acting on each cutting inserts 114 and the fluid jetting force acting on each cutting inserts 114, it is possible to elevate the cutting insert 114 in a controlled manner from its physical contact with the carrier 102, and thus exposing the bottom side of the cutting insert 114, which rests against the carrier 102, to drying medium and/or rinsing medium.

Alternatively, the gas or gas mixture which the fan 350 feeds to the first chamber 304 may be taken from other locations than from the separator 336, e.g. from the atmosphere outside the casing 302. Further alternatives to the apparatus shown in Fig. 7 may be provided by excluding the suction unit 352, or excluding the fan 350 and/or the gas valve 348. Further alternatives to the apparatus shown in Fig. 7 may be provided by excluding the gas valve 348. Further alternatives to the apparatus shown in Fig. 7 may be provided by excluding one or two of the blasting means, rinsing means and drying means, and by excluding the fluid nozzle 360 of the second chamber 306. For example, the rinsing and drying may be performed in one or a plurality of other additional casings.

The force by which a cutting insert 114 is forced toward the carrier 102 is dependent on the difference P₂ -P₁ between the pressure P₁ of the second chamber 306 and the pressure P₂ of the first chamber 304 and the geometry of the cutting insert 114.

In the above disclosed embodiments of the apparatus, the first chamber 304 may correspond to the first region 304, and the second chamber 306 may correspond to the second region 306.

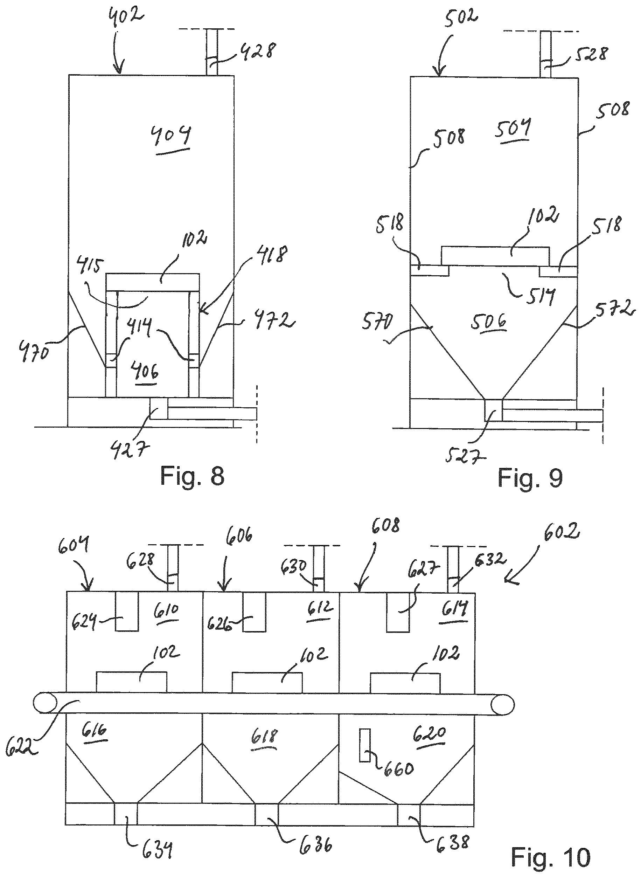

With reference to Figs. 8 and 9, other embodiments of the casing 402, 502 of the apparatus are schematically shown. In fig. 8, the support 418 is provided with passages 414 at a distance from the carrier 102 for the communication between the first and second chambers/regions 404, 406, and the support 418 is also provided with a central opening 415. The support 418 of Fig. 8 may be adapted for a carrier 102 having seats with through-holes that are adapted to be completely covered by cutting inserts. In Fig. 8, the flow of medium is guided from the first chamber 404 to the second chamber 406 via the passages 414, whereas no, or only a small amount of, medium is guided via the through-holes of the carrier 102 and the central opening 415. Although no medium is guided through the through-holes of the carrier 102, the cutting inserts are still forced toward the carrier 102 by means of the through-holes of the carrier 102 and the pressure difference between the two chambers 404, 406. In fig. 9, the support 518 is in the form of a horizontal plate connected to the side walls 508 and defining a centrally located passage 514 for the communication between the first and second chambers 504, 506. Alternatively, the casing 502 of Fig. 9 may have only one chamber, and the support 518 may comprise a plurality of bars or rods, which may extend horizontally and may be spaced apart. A casing 502, having only one chamber, may still enclose a first region 504 and a second region 506 as disclosed above. In Fig. 8, the first chamber 404 is in addition defined by two sloping walls 470, 472, and in Fig. 9, the second chamber 506 is in addition defined by two sloping walls 570, 572. Otherwise, the apparatuses of Figs. 8 and 9 may be provided with equipment corresponding to the equipment shown in Fig. 7.

Fig. 10 schematically shows another embodiment of the apparatus according to the present invention. The apparatus comprises a cabinet 602 comprising three casings 604, 606, 608 connected to one another, each of the casings 604, 606, 608 comprising a first chamber 610, 612, 614 and a second chamber 616, 618, 620. Conveyor means, e.g. including a conveyor belt 622, are provided for moving a carrier 102 from the first casing 604 to the second and third casings 606, 608. Other conveyor means are possible. The first chamber 610, 612, 614 of each casing 604, 606, 608 is provided with workpiece treating means for treating the cutting inserts 114 by the carrier 102. The workpiece treating means of the first casing 604 may comprise blasting means comprising a blast nozzle 624 for propelling a blasting medium to a surface of the cutting inserts 114 held by the carrier 102. The workpiece treating means of the second casing 606 may comprise rinsing means comprising a rinsing nozzle 626 for jetting a rinsing medium to a surface of the cutting inserts 114 held by the carrier 102. The workpiece treating means of the third casing 608 may comprise drying means comprising a drying nozzle 627 for guiding a drying medium to a surface of the cutting inserts 114 held by the carrier 102. The second chamber 620 of the third casing 608 may be provided with at least one fluid nozzle 660 of the same sort as disclosed in connection with Fig. 7. The second chamber 618 of the second casing 606 may also be provided with at least one fluid nozzle of the same sort as disclosed in connection with Fig. 7. Each first chamber 610, 612, 614 may be provided with an inlet 628, 630, 632, and each second chamber 616, 618, 620 may be provided with an outlet 634, 636, 638. Otherwise, each casing 604, 606, 608 may be provided with the equipment as disclosed in connection with Fig. 7 after suitable modifications. One or two of the casings 604, 606, 608 may also be excluded, or further casings may be added to the apparatus.

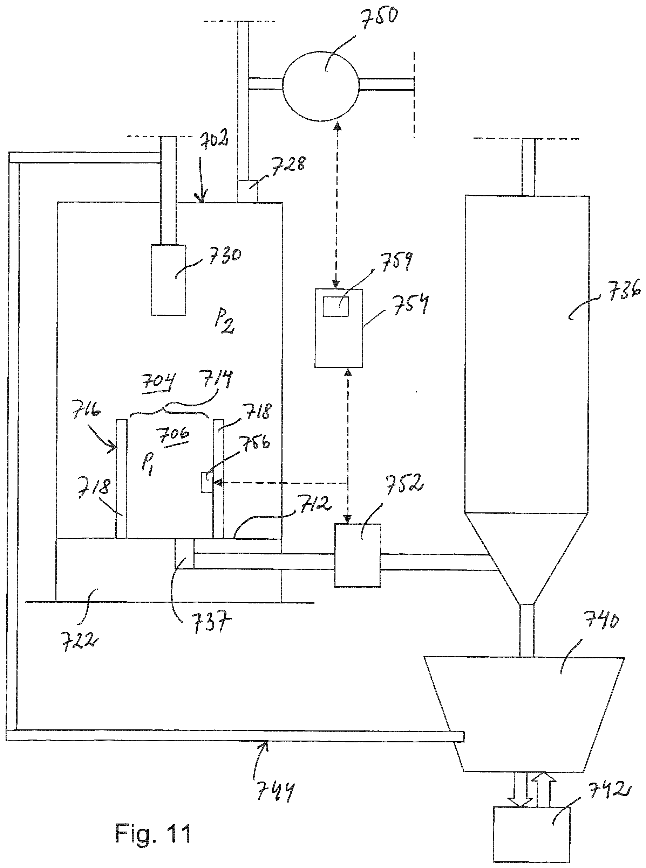

Fig. 11 schematically shows a further embodiment of the apparatus according to the present invention, where the casing 702 has a single chamber and encloses a first and a second region 704, 706. In this embodiment, the fan 750 is adapted to feed gas to the first region 704 through an inlet 728, where the gas is taken from a location outside the separator 736, e.g. from an atmosphere outside the casing 702. Further, the measuring means may include only one pressure gauge 756 for measuring the pressure P₁ of the second region 706. If the pressure P₂ of the first region 704 is maintained at atmospheric pressure, the measurement of the pressure difference between the first and second regions 704, 706 may be obtained by only measuring the pressure P₁ of the second region 706. Further, in this embodiment, the workpiece treating means of the first region 704 include only one type of workpiece treating means, e.g. blasting means comprising a blast nozzle 730. However, the casing 702 may be provided with additional workpiece treating means. In this embodiment, the differential pressure creating means for creating a pressure difference between the first region 704 and the second region 706 comprise a fan 750 and a suction unit 752, corresponding to the fan and the suction unit as disclosed in Fig. 7, and a control unit 754 connected thereto and connected to the pressure gauge 756. In this embodiment, the differential pressure creating means are adapted to guide a flow of medium or media from the first region 704 to the second region 706 through the at least one passage 714 in order to create said pressure difference. In Fig. 11, the support means 716 is shown with the carrier 102 removed and the passage 714 uncovered. In this embodiment, the support means 716 may include a plurality of rods or bars 718, e.g. four bars 718, which may extend in a substantially vertical direction and be spaced apart. At one end, the rods or bars 718 are adapted to receive and support the carrier 102, whereas at the other end, the rods or bars 718 are mounted to a bottom wall 712 of the casing. However, other support means are possible.

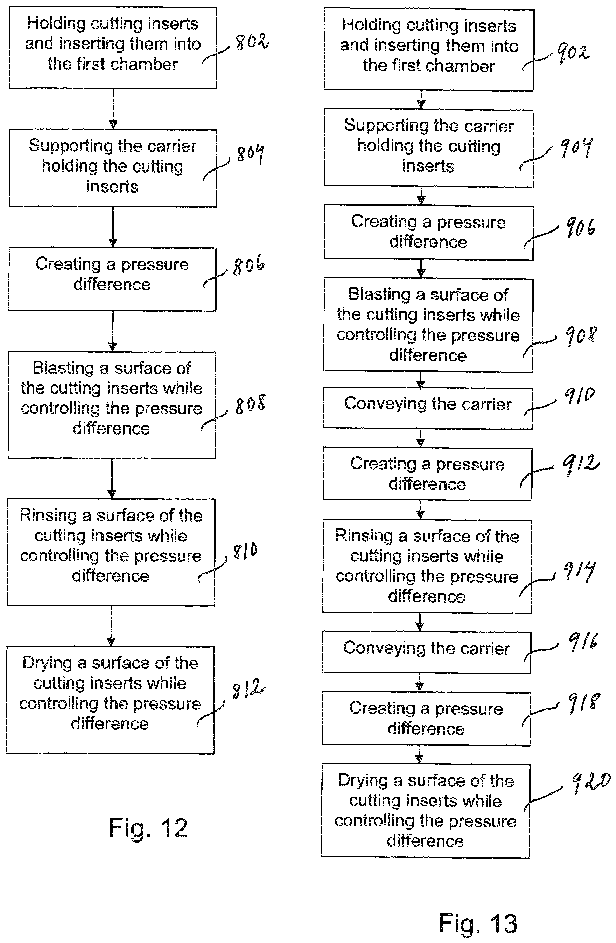

Fig. 12 schematically illustrates aspects of the method for treating at least one workpiece according to the present invention when using an apparatus as shown in Fig. 7. The workpiece is hereinafter disclosed in the form of a cutting insert, but may be any item or object as mentioned above. A plurality of cutting inserts is held by a carrier and inserted in the first chamber/region 304 of the casing 302, at step 802. The carrier is supported, at step 804, such that the at least one through-hole 110 of the carrier 102 is in communication with the first and second chambers/regions 304, 306 and the at least one passage 314, and such that the cutting inserts 114 are held on top of the carrier 102 or vertically above the carrier 102. A pressure difference between the first chamber/region 304 and the second chamber/region 306 is created, at step 806, the pressure of the second chamber/region being lower than the pressure of the first chamber/region, by drawing, e.g. sucking, out the medium or media of the second chamber 306 via the outlet 327 of the second chamber 306 and/or by feeding a medium or media to the first chamber 304 via the inlet 328 of the first chamber 304, and by guiding a flow of medium or media through the at least passage 314 and the at least one through-hole 110 of the carrier 102, whereupon the cutting inserts 114 are forced toward the carrier 102. A surface of the cutting inserts 114 is treated by propelling or jetting a medium to the surface of the cutting inserts 114. More precisely, a surface of the cutting inserts 114 may be blasted, e.g. wet or dry blasted, by propelling a blasting medium to the surface of cutting inserts 114 held by the carrier 102, at step 808, while controlling said pressure difference to hold the cutting insets in correct positions. A surface of the cutting inserts may be rinsed by jetting a rinsing medium to the surface of the cutting inserts held by the carrier, at step 810, while controlling said pressure difference to hold the cutting insets in correct positions. The cutting inserts may be dried by guiding a drying medium to a surface of the cutting inserts by the carried and by jetting a gas or a gas mixture from a fluid nozzle to the at least one passage and the bottom side of the cutting inserts 114 in a substantially upward direction, or in any other suitable direction, e.g. from the side, at step 812, while controlling the gas or the gas mixture jetted from the fluid nozzle and/or said pressure difference to balance the pressure difference force acting on each cutting insert and the fluid jetting force acting on each cutting insert. Instead of blasting, the cutting inserts 114 may be subjected to shot peening, or any other treatment or treatments. Further embodiments of the method may be provided by excluding one or two of the steps of blasting, rinsing and drying. Additional treatment steps may also be added.

Alternatively, the step of rinsing 810 may also include the step of jetting a fluid or a fluid mixture from a fluid nozzle to the at least one passage and the bottom side of the cutting inserts 114 in a substantially upward direction, or in any other suitable direction, e.g. from the side, while controlling the fluid or the fluid mixture jetted from the fluid nozzle and/or said pressure difference to balance the pressure difference force acting on each cutting insert and the fluid jetting force acting on each cutting insert. When rinsing, the fluid or fluid mixture may be a gas or gas mixture, or a liquid or liquid mixture, or a mixture thereof, i.e. a mixture of gas and liquid.

Fig. 13 schematically illustrates further aspects of the method for treating at least one workpiece according to the present invention when using an apparatus as shown in Fig. 10. The workpiece is hereinafter disclosed in the form of a cutting insert, but may be any item as mentioned above. A plurality of cutting inserts is held by a carrier 102 and inserted in the first chamber 610 of the first casing 604, at step 902. The carrier is positioned on and supported, at step 904, by a conveyor belt such that the at least one through-hole 110 of the carrier 102 is in communication with the first and second chambers 610, 616 of the first casing and the at least one passage of the first casing 604. A pressure difference between the first chamber 610 and the second chamber 616 is created, at step 906, the pressure of the second chamber being lower than the pressure of the first chamber, by drawing out the medium or media of the second chamber 616 via the outlet 634 of the first casing 604 and/or by feeding a medium or media to the first chamber 610 via the inlet 628 of the first casing 604, and by guiding a flow of medium or media through the at least one passage and the at least one through-hole 110 of the carrier 102, whereupon the cutting inserts 114 are forced toward the carrier 102. A surface of the cutting inserts 114 is treated by propelling or jetting a medium to the surface of the cutting inserts 114. More precisely, a surface of the cutting inserts 114 is blasted by propelling a blasting medium to the surface of cutting inserts 114 held by the carrier 102, at step 908, while controlling said pressure difference to hold the cutting insets in correct positions. The carrier is conveyed to the first chamber 612 of the second casing 606, at step 910. A pressure difference between the first chamber 612 and the second chamber 618 is created in the second casing 606, at step 912, in a corresponding way as in step 906. A surface of the cutting inserts is rinsed by jetting a rinsing medium to the surface of the cutting inserts held by the carrier, at step 914, while controlling said pressure difference to hold the cutting insets in correct positions. The carrier is conveyed to the first chamber 614 of the third casing 608, at step 916. A pressure difference between the first chamber 614 and the second chamber 620 is created in the third casing 608, at step 918, in a corresponding way as in step 906. The cutting inserts are dried by guiding a drying medium to a surface of the cutting inserts held by the carrier, and by jetting a gas or a gas mixture from a fluid nozzle to the at least one passage and the bottom side of the cutting inserts 114 in a substantially upward direction, or in any other suitable direction, at step 920, while controlling the fluid or the fluid mixture jetted from the fluid nozzle and/or said pressure difference to balance the pressure difference force acting on each cutting insert and the fluid jetting force acting on each cutting insert. Instead of blasting, the cutting inserts 114 may be subjected to shot peening, or other treatments. Additional treatment steps may also be added.

Alternatively, the step of rinsing 914 of the method of Fig. 13 may also include the step of jetting a fluid or a fluid mixture from a fluid nozzle to the at least one passage and the bottom side of the cutting inserts 114, while controlling the fluid or the fluid mixture jetted from the fluid nozzle and/or said pressure difference to balance the pressure difference force acting on each cutting insert and the fluid jetting force acting on each cutting insert. When rinsing, the fluid or fluid mixture may be a gas or gas mixture, or a liquid or liquid mixture, or a mixture thereof, i.e. a mixture of gas and liquid.

During the step of rinsing 810, 914 and/or the step of drying 812, 920 the cutting inserts 114 may be rinsed and dried, respectively, without jetting the fluid or the fluid mixture from the fluid nozzle to the at least one passage. For example, the cutting inserts 114 may be subjected to rinsing medium and/or drying medium without being elevated by jetted fluid from the fluid nozzle. The fluid or the fluid mixture may be periodically jetted from the fluid nozzle to the at least one passage during the rinsing and/or drying.

In the above disclosed embodiments of the method according to the present invention, the first chamber may correspond to the first region, and the second chamber may correspond to the second region.

The invention shall not be considered limited to the embodiments illustrated, but can be modified and altered in many ways by one skilled in the art, without departing from the scope of the invention as defined by the appended claims.

## Claims

1. An apparatus for treating at least one workpiece (114), the apparatus comprising a casing (302) which at least partially encloses a first region (304) and a second region (306), the first and second regions being adapted to be in communication with one another by at least one passage (314), and support means (316) for supporting a carrier (102) adapted to hold the at least one workpiece, the support means being adapted to support the carrier so that the at least one workpiece is positioned in the first region (304) for treatment, **characterized in that** the apparatus comprises differential pressure creating means for creating a pressure difference (P₂ - P₁) between the first region and the second region, the at least one pressure (P₁) of the second region being lower than the at least one pressure (P₂) of the first region, to force the at least one workpiece toward the carrier, **in that** the at least one passage (314) is adapted to be in communication with both the first region (304) and the second region (306) when the carrier (102) is supported by the support means (316), and **in that** the differential pressure creating means are adapted to guide a flow of medium or media from the first region to the second region through the at least one passage in order, at least partly, to create said pressure difference, wherein one and the same system is arranged to hold the work piece and to take care of the medium used for treating the work piece.

2. An apparatus according to claim 1, **characterized in that** the casing (302) is provided with an outlet (327), and **in that** the differential pressure creating means are adapted to evacuate a medium or media from the second region (306) via the outlet in order to, at least partly, create said pressure difference.

3. An apparatus according to claim 1 or 2, **characterized in that** the casing (302) is provided with an inlet (328), and **in that** the differential pressure creating means are adapted to feed a medium or media to the first chamber region (304) via the inlet in order to, at least partly, create said pressure difference.

4. An apparatus according to any of the claims 1 to 3, **characterized in that** the support means (316) is adapted to support a carrier (102) having at least one through-hole (110), **in that** the support means is adapted to support the carrier such that the at least one through-hole of the carrier is in communication with the first and second regions (304, 306) and the at least one passage (314), and **in that** the differential pressure creating means are adapted to guide a flow of medium or media through the at least one through-hole of the carrier.

5. An apparatus according to any of the claims 1 to 4, **characterized in that** the first region (304) is provided with workpiece treating means for treating the at least one workpiece (114) held by the carrier (102).

6. An apparatus according to claim 5, **characterized in that** the workpiece treating means are arranged to propel or jet a medium to a surface of the at least one workpiece (114) held by the carrier (102) to treat the at least one workpiece.

7. An apparatus according to claim 5 or 6, **characterized in that** the work-piece treating means comprise blasting means for propelling a blasting medium to a surface of the at least one workpiece (114) held by the carrier (102).

8. An apparatus according to any of the claims 5 to 7, **characterized in that** the workpiece treating means comprise rinsing means for jetting a rinsing medium to a surface of the at least one workpiece (114) held by the carrier (102).

9. An apparatus according to any of the claims 5 to 8, **characterized in that** the workpiece treating means comprise drying means for guiding a drying medium to a surface of the at least one workpiece (114) held by the carrier (102).

10. An apparatus according to any of the claims 1 to 9, **characterized in that** the second region (306) is provided with at least one fluid nozzle (360) for jetting a fluid or a fluid mixture to the at least one passage (314).

11. An apparatus according to claim 10, **characterized in that** the apparatus comprises nozzle controlling means (362) for controlling the fluid or fluid mixture jetted from the fluid nozzle (360), and **in that** the nozzle controlling means and/or the differential pressure creating means are/is adapted to balance the pressure difference force acting on the at least one workpiece (114) and the fluid jetting force acting on the at least one workpiece.

12. An apparatus according to any of the claims 1 to 11, **characterized in that** the casing (302) has a first chamber (304) and a second chamber (306), the first and second chambers being adapted to be in communication with one another by the at least one passage (314), and **in that** the first chamber (304) at least partially encloses the first region (304) and the second chamber (306) at least partially encloses the second region (306).

13. A method for treating at least one workpiece, comprising the step of holding (802) the at least one workpiece, and the step of holding (802) the at least one workpiece comprises holding the at least one workpiece by means of a carrier which is, at least partly, positioned in a casing, the casing at least partially enclosing a first region and a second region which are adapted to be in communication with one another by at least one passage, and the at least one workpiece is positioned in the first region for treatment, **characterized in that** the step of holding the at least one workpiece comprises
supporting (804) the carrier such that the at least one passage is in communication with both the first region and the second region,
forcing the at least one workpiece toward the carrier by creating (806) a pressure difference between the first region and the second region, the at least one pressure of the second region being lower than the at least one pressure of the first region, and
guiding a flow of medium or media from the first region to the second region through the at least one passage in order to, at least partly, create said pressure difference,
wherein one and the same system is arranged to hold the work piece and to take care of the medium used for treating the work piece.

14. A method according to claim 13, **characterized in that** said pressure difference is, at least partly, created by evacuating a medium or media from the second region via an outlet of the casing.

15. A method according to claim 13 or 14, **characterized in that** said pressure difference is, at least partly, created by feeding a medium or media to the first region via an inlet of the casing.

16. A method according to any of the claims 13 to 15, **characterized in that** the step of holding (802) the at least one workpiece comprises
supporting (804) a carrier, having at least one through-hole, such that the at least one through-hole of the carrier is in communication with the first and second regions and the at least one passage, and
guiding a flow of medium or media through the at least one through-hole of the carrier.

17. A method according to any of the claims 13 to 16, **characterized in that** the method comprises the step of treating a surface of the at least one workpiece by propelling or jetting a medium to the surface of the at least one workpiece held by the carrier.

18. A method according to any of the claims 13 to 17, **characterized in that** the method comprises the step of blasting (808) a surface of the at least one work-piece, and **in that** the step of blasting comprises propelling a blasting medium to the surface of the at least one workpiece held by the carrier.

19. A method according to any of the claims 13 to 18, **characterized in that** the method comprises the step of rinsing (810) a surface of the at least one work-piece, and **in that** the step of rinsing comprises jetting a rinsing medium to the surface of the at least one workpiece held by the carrier.

20. A method according to any of the claims 13 to 19, **characterized in that** the method comprises the step of drying (812) the at least one workpiece, and **in that** the step of drying comprises guiding a drying medium to a surface of the at least one workpiece held by the carrier.

21. A method according to any of the claims 13 to 20, **characterized in that** the at least one workpiece, which is treated, comprises a cutting insert.

## Patentansprüche

1. Vorrichtung zum Behandeln zumindest eines Werkstückes (114), wobei die Vorrichtung ein Gehäuse (302) aufweist, welches zumindest teilweise einen ersten Bereich (304) und einen zweiten Bereich (306) einschließt, wobei die ersten und zweiten Bereiche dafür ausgelegt sind, über zumindest einen Übergang (314) miteinander in Verbindung zu stehen, und mit Halterungseinrichtungen (316) zum Haltern eines Trägers (102), der dafür ausgelegt ist, das zumindest eine Werkstück zu halten, wobei die Halterungseinrichtung dafür ausgelegt ist, den Träger zu haltern, sodass das zumindest eine Werkstück für eine Behandlung in dem ersten Bereich (304) angeordnet ist, **dadurch gekennzeichnet, dass** die Vorrichtung eine Einrichtung zum Erzeugen eines Differenzdruckes aufweist, um eine Druckdifferenz (P₂-P₁) zwischen dem ersten Bereich und dem zweiten Bereich zu erzeugen, wobei der zumindest eine Druck (P₁) des zweiten Bereiches kleiner ist als der zumindest eine Druck (P₂) des ersten Bereiches, um das zumindest eine Werkstück in Richtung des Trägers zu drücken, dass der zumindest eine Übergang (314) dafür ausgelegt ist, dass er in Verbindung sowohl mit dem ersten Bereich (304) als auch mit dem zweiten Bereich (306) steht, wenn der Träger (102) durch die Halterungseinrichtung (316) gehaltert wird, und dass die Einrichtung zum Erzeugen des Differenzdruckes dafür ausgelegt ist, einen Strom eines Mediums oder von Medien von dem ersten Bereich zu dem zweiten Bereich durch den zumindest einen Übergang zu leiten, um zumindest teilweise die Druckdifferenz zu erzeugen, wobei ein und dasselbe System dafür ausgelegt ist, das Werkstück zu halten und das Medium zu handhaben, welches für die Behandlung des Werkstückes verwendet wird.

2. Vorrichtung nach Anspruch 1, **dadurch gekennzeichnet, dass** das Gehäuse (302) mit einem Ausgang (327) versehen ist, und dass die Einrichtung zum Erzeugen von Differenzdruck dafür ausgelegt ist, ein Medium oder Medien aus dem zweiten Bereich (306) über den Ausgang abzuziehen, um zumindest teilweise die Druckdifferenz zu erzeugen.

3. Vorrichtung nach Anspruch 1 oder 2, **dadurch gekennzeichnet, dass** das Gehäuse (302) mit einem Einlass (328) versehen ist und dass die Einrichtung zum Erzeugen von Differenzdruck dafür ausgelegt ist, ein Medium oder Medien in den ersten Kammerbereich (304) über den Einlass zuzuführen, um zumindest teilweise die Druckdifferenz zu erzeugen.

4. Vorrichtung nach einem der Ansprüche 1 bis 3, **dadurch gekennzeichnet, dass** die Halterungseinrichtung (316) dafür ausgelegt ist, einen Träger (102) zu haltern, der zumindest eine Durchgangsbohrung (110) hat, dass die Halterungseinrichtung dafür ausgelegt ist, den Träger derart zu haltern, dass die zumindest eine Durchgangsbohrung des Trägers in Verbindung mit den ersten und zweiten Bereichen und mit dem zumindest einen Übergang (314) steht, und dass die Einrichtung zum Erzeugen von Differenzdruck dafür ausgelegt ist, einen Strom eines Mediums oder von Medien durch die zumindest eine Durchgangsbohrung in dem Träger zu leiten.

5. Vorrichtung nach einem der Ansprüche 1 bis 4, **dadurch gekennzeichnet, dass** der erste Bereich (304) mit der Einrichtung zum Behandeln des Werkstückes versehen ist, um das von dem Träger (102) gehaltene zumindest eine Werkstück (114) zu behandeln.

6. Vorrichtung nach Anspruch 5, **dadurch gekennzeichnet, dass** die Einrichtung zum Behandeln des Werkstückes dafür ausgelegt ist, ein Medium auf eine Oberfläche des zumindest einen Werkstückes (114), welches von dem Träger (102) gehalten wird, zu treiben oder abzustrahlen, um das zumindest eine Werkstück zu behandeln.

7. Vorrichtung nach Anspruch 5 oder 6, **dadurch gekennzeichnet, dass** die Einrichtung zum Behandeln des Werkstückes eine Strahleinrichtung zum Antrieb eines Abstrahlmediums in Richtung einer Oberfläche des zumindest einen Werkstückes (114) aufweist, welches von dem Träger (102) gehalten wird.

8. Vorrichtung nach einem der Ansprüche 5 bis 7, **dadurch gekennzeichnet, dass** die Einrichtung zum Behandeln des Werkstückes eine Spüleinrichtung aufweist, um ein Spülmedium auf eine Oberfläche des von dem Träger (102) gehaltenen zumindest einen Werkstücks (114) abzustrahlen.

9. Vorrichtung nach einem der Ansprüche 5 bis 8, **dadurch gekennzeichnet, dass** die Einrichtung zum Behandeln des Werkstückes eine Trocknungseinrichtung aufweist, für das Leiten eines Trocknungsmedium auf eine Oberfläche des zumindest einen von dem Träger (102) gehaltenen Werkstückes (114).

10. Vorrichtung nach einem der Ansprüche 1 bis 9, **dadurch gekennzeichnet, dass** der zweite Bereich (306) mit zumindest einer Fluiddüse (360) versehen ist, um ein Fluid oder eine Fluidmischung zu dem zumindest einen Übergang (314) hin abzustrahlen.

11. Vorrichtung nach Anspruch 10, **dadurch gekennzeichnet, dass** sie eine Düsensteuereinrichtung (362) aufweist, um das von der Fluiddüse (360) abgestrahlte Fluid oder die Fluidmischung zu steuern, und dass die Düsensteuereinrichtung und/oder die Einrichtung zum Erzeugen des Differenzdrucks dafür ausgelegt ist bzw. sind, die Druckdifferenz, die auf das zumindest eine Werkstück (114) wirkt und die Kraft, welche durch den Fluidstrahl auf das zumindest eine Werkstück ausgeübt wird, auszugleichen.

12. Vorrichtung nach einem der Ansprüche 1 bis 11, **dadurch gekennzeichnet, dass** das Gehäuse (302) eine erste Kammer (304) und eine zweite Kammer (306) hat, wobei die ersten und zweiten Kammern dafür ausgelegt sind, dass sie durch zumindest einen Übergang (314) in Verbindung miteinander stehen, und dass die erste Kammer (304) zumindest teilweise den zweiten Bereich (304) umfasst und die zweite Kammer (306) zumindest teilweise den zweiten Bereich (306) umfasst.

13. Verfahren zum Behandeln zumindest eines Werkstückes mit den Schritten Halten (802) des zumindest einen Werkstückes, wobei der Schritt Halten (802) des zumindest einen Werkstückes das Halten des zumindest einen Werkstückes mit Hilfe eines Trägers aufweist, der zumindest teilweise in einem Gehäuse angeordnet ist, wobei das Gehäuse zumindest teilweise einen ersten Bereich und einen zweiten Bereich umschließt, die dafür ausgelegt sind, dass sie über zumindest einen Übergang miteinander in Verbindung stehen, und wobei das zumindest eine Werkstück für eine Behandlung in dem ersten Bereich angeordnet ist, **dadurch gekennzeichnet, dass** der Schritt des Haltens des zumindest einen Werkstückes aufweist
Haltern (804) des Trägers, sodass der zumindest eine Übergang in Verbindung sowohl mit dem ersten Bereich als auch mit dem zweiten Bereich steht,
Drücken des zumindest einen Werkstückes in Richtung des Trägers durch Erzeugen (806) einer Druckdifferenz zwischen dem ersten Bereich und dem zweiten Bereich, wobei der zumindest eine Druck des zweiten Bereiches niedriger ist als der zumindest eine Druck des ersten Bereiches, und
Leiten eines Stroms aus einem Medium oder aus Medien von dem ersten Bereich zu dem zweiten Bereich durch den zumindest einen Übergang, um zumindest teilweise die Druckdifferenz zu erzeugen,
wobei ein und dasselbe System dafür ausgelegt ist, das Werkstück zu halten und das Medium zu handhaben, welches zum Behandeln des Werkstückes verwendet wird.

14. Verfahren nach Anspruch 13, **dadurch gekennzeichnet, dass** die Druckdifferenz zumindest teilweise durch Abziehen eines Mediums oder von Medien aus dem zweiten Bereich über einen Auslass des Gehäuses hervorgerufen wird.

15. Verfahren nach Anspruch 13 oder 14, **dadurch gekennzeichnet, dass** die Druckdifferenz zumindest teilweise durch Zuführen eines Mediums oder von Medien zu dem ersten Bereich über zumindest einen Einlass des Gehäuses hervorgerufen wird.

16. Verfahren nach einem der Ansprüche 13 bis 15, **dadurch gekennzeichnet, dass** der Schritt des Haltens (802) des zumindest einen Werkstückes aufweist:
Haltern (804) eines Trägers, der zumindest eine Durchgangsbohrung hat, sodass die zumindest eine Durchgangsbohrung des Trägers in Verbindung mit den ersten und zweiten Bereichen und dem zumindest einen Übergang steht, und
Führen eines Stromes eines Mediums oder von Medien durch die zumindest eine Durchgangsbohrung des Trägers.

17. Verfahren nach einem der Ansprüche 13 bis 16, **dadurch gekennzeichnet, dass** das Verfahren den Schritt aufweist, dass eine Oberfläche zumindest eines Werkstückes behandelt wird durch Beschleunigen oder Abstrahlen eines Mediums auf die Oberfläche des zumindest einen durch den Träger gehaltenen Werkstückes.

18. Verfahren nach einem der Ansprüche 13 bis 17, **dadurch gekennzeichnet, dass** das Verfahren den Schritt des Bestrahlens (808) einer Oberfläche des zumindest einen Werkstückes aufweist, und dass der Schritt des Bestrahlens das Beschleunigen eines Strahlmediums auf die Oberfläche des zumindest einen von dem Träger gehaltenen Werkstückes aufweist.

19. Verfahren nach einem der Ansprüche 13 bis 18, **dadurch gekennzeichnet, dass** das Verfahren den Schritt des Spülens (810) einer Oberfläche des zumindest einen Werkstückes aufweist, und dass der Schritt des Spülens das Abstrahlen eines Spülmediums auf die Oberfläche des zumindest einen von dem Träger gehaltenen Werkstückes aufweist.

20. Verfahren nach einem der Ansprüche 13 bis 19, **dadurch gekennzeichnet, dass** das Verfahren den Schritt des Trocknens (812) des zumindest einen Werkstückes aufweist und dass der Schritt des Trocknens das Leiten eines Trocknungsmediums auf eine Oberfläche des zumindest einen von dem Träger gehaltenen Werkstückes aufweist.

21. Verfahren nach einem der Ansprüche 13 bis 20, **dadurch gekennzeichnet, dass** das zumindest eine Werkstück, welches behandelt wird, einen Schneideinsatz aufweist.

## Revendications

1. Appareil de traitement d'au moins une pièce (114), l'appareil comprenant un boîtier (302) lequel renferme au moins en partie une première zone (304) et une deuxième zone (306), les première et deuxième zones étant conçues pour être en communication l'une avec l'autre par le biais d'au moins un passage (314), et un moyen de support (316) destiné à supporter un porte-pièce (102) conçu pour maintenir la au moins une pièce, le moyen de support étant conçu pour supporter le porte-pièce de sorte que la au moins une pièce est positionnée dans la première zone (304) en vue d'un traitement, **caractérisé en ce que** l'appareil comprend des moyens de création de pression différentielle destinés à créer une différence de pression (P₂-P₁) entre la première zone et la deuxième zone, la au moins une pression (P₁) de la deuxième zone étant inférieure à la au moins une pression (P₂) de la première zone, afin de pousser la au moins une pièce vers le porte-pièce, **en ce que** le au moins un passage (314) est conçu pour être en communication avec à la fois la première zone (304) et la deuxième zone (306) lorsque le porte-pièce (102) est supporté par le moyen de support (316), et **en ce que** les moyens de création de pression différentielle sont conçus pour guider un écoulement de milieu ou de milieux de la première zone vers la deuxième zone à travers le au moins un passage de sorte à créer, au moins en partie, ladite différence de pression, où un seul et même système est agencé pour maintenir la pièce et s'occuper du milieu utilisé pour le traitement de la pièce.

2. Appareil selon la revendication 1, **caractérisé en ce que** le boîtier (302) est doté d'une sortie (327), et **en ce que** les moyens de création de pression différentielle sont conçus pour évacuer un milieu ou des milieux hors de la deuxième zone (306) via la sortie de sorte à créer, au moins en partie, ladite différence de pression.

3. Appareil selon la revendication 1 ou 2, **caractérisé en ce que** le boîtier (302) est doté d'une entrée (328), et **en ce que** les moyens de création de pression différentielle sont conçus pour fournir un milieu ou des milieux à la première zone d'enceinte (304) via l'entrée de sorte à créer, au moins en partie, ladite différence de pression.

4. Appareil selon l'une quelconque des revendications 1 à 3, **caractérisé en ce que** le moyen de support (316) est conçu pour supporter un porte-pièce (102) présentant au moins un trou traversant (110), **en ce que** le moyen de support est conçu pour supporter le porte-pièce de telle sorte que le au moins un trou traversant du porte-pièce est en communication avec les première et deuxième zones (304, 306) et le au moins un passage (314), et **en ce que** les moyens de création de pression différentielle sont conçus pour guider un écoulement de milieu ou de milieux à travers le au moins un trou traversant du porte-pièce.

5. Appareil selon l'une quelconque des revendications 1 à 4, **caractérisé en ce que** la première zone (304) est pourvue de moyens de traitement de pièce destinés à traiter la au moins une pièce (114) maintenue par le porte-pièce (102).

6. Appareil selon la revendication 5, **caractérisé en ce que** les moyens de traitement de pièce sont agencés pour projeter ou pulvériser un milieu sur une surface de la au moins une pièce (114) maintenue par le porte-pièce (102) afin de traiter la au moins une pièce.

7. Appareil selon la revendication 5 ou 6, **caractérisé en ce que** les moyens de traitement de pièce comprennent un moyen de sablage destiné à projeter un milieu de sablage sur une surface de la au moins une pièce (114) maintenue par le porte-pièce (102).

8. Appareil selon l'une quelconque des revendications 5 à 7, **caractérisé en ce que** les moyens de traitement de pièce comprennent des moyens de rinçage destinés à pulvériser un milieu de rinçage sur une surface de la au moins une pièce (114) maintenue par le porte-pièce (102).

9. Appareil selon l'une quelconque des revendications 5 à 8, **caractérisé en ce que** les moyens de traitement de pièce comprennent des moyens de séchage destinés à guider un milieu de séchage vers une surface de la au moins une pièce (114) maintenue par le porte-pièce (102).

10. Appareil selon l'une quelconque des revendications 1 à 9, **caractérisé en ce que** la deuxième zone (306) est dotée d'au moins une buse à fluide (360) destinée à pulvériser un fluide ou un mélange de fluides vers le au moins un passage (314).

11. Appareil selon la revendication 10, **caractérisé en ce que** l'appareil comprend un moyen de commande de buse (362) destiné à maîtriser le fluide ou le mélange de fluides pulvérisé depuis la buse à fluide (360), et **en ce que** le moyen de commande de buse et/ou les moyens de création de pression différentielle est/sont conçu(s) pour équilibrer la force de la différence de pression s'exerçant sur la au moins une pièce (114) et la force de la pulvérisation de fluide s'exerçant sur la au moins une pièce.

12. Appareil selon l'une quelconque des revendications 1 à 11, **caractérisé en ce que** le boîtier (302) présente une première enceinte (304) et une deuxième enceinte (306), les première et deuxième enceintes étant conçues pour être en communication l'une avec l'autre par le biais du au moins un passage (314), et **en ce que** la première enceinte (304) renferme au moins en partie la première zone (304) et la deuxième enceinte (306) renferme au moins en partie la deuxième zone (306).

13. Procédé de traitement d'au moins une pièce, comprenant l'étape consistant à immobiliser (802) la au moins une pièce, et l'étape consistant à immobiliser (802) la au moins une pièce comprend le fait d'immobiliser la au moins une pièce au moyen d'un porte-pièce lequel est, au moins en partie, positionné dans un boîtier, le boîtier renfermant au moins en partie une première zone et une deuxième zone lesquelles sont conçues pour être en communication l'une avec l'autre par le biais d'au moins un passage, et la au moins une pièce est positionnée dans la première zone en vue d'un traitement, **caractérisé en ce que** l'étape consistant à immobiliser la au moins une pièce comprend
le fait de faire supporter (804) le porte-pièce de telle sorte que le au moins un passage est en communication avec à la fois la première zone et la deuxième zone,
le fait de pousser la au moins une pièce vers le porte-pièce en créant (806) une différence de pression entre la première zone et la deuxième zone, la au moins une pression de la deuxième zone étant inférieure à la au moins une pression de la première zone, et
le fait de guider un écoulement de milieu ou de milieux de la première zone vers la deuxième zone à travers le au moins un passage de sorte à créer, au moins en partie, ladite différence de pression,
où un seul et même système est agencé pour maintenir la pièce et s'occuper du milieu utilisé pour le traitement de la pièce.

14. Procédé selon la revendication 13, **caractérisé en ce que** ladite différence de pression est, au moins en partie, créée en évacuant un milieu ou des milieux hors de la deuxième zone via une sortie du boîtier.

15. Procédé selon la revendication 13 ou 14, **caractérisé en ce que** ladite différence de pression est, au moins en partie, créée en fournissant un milieu ou des milieux à la première zone via une entrée du boîtier.

16. Procédé selon l'une quelconque des revendications 13 à 15, **caractérisé en ce que** l'étape consistant à immobiliser (802) la au moins une pièce comprend
le fait de faire supporter (804) un porte-pièce, présentant au moins un trou traversant, de telle sorte que le au moins un trou traversant du porte-pièce est en communication avec les première et deuxième zones et le au moins un passage, et
le fait de guider un écoulement de milieu ou de milieux à travers le au moins un trou traversant du porte-pièce.

17. Procédé selon l'une quelconque des revendications 13 à 16, **caractérisé en ce que** le procédé comprend l'étape consistant à traiter une surface de la au moins une pièce en projetant ou en pulvérisant un milieu sur la surface de la au moins une pièce maintenue par le porte-pièce.

18. Procédé selon l'une quelconque des revendications 13 à 17, **caractérisé en ce que** le procédé comprend l'étape consistant à sabler (808) une surface de la au moins une pièce, et **en ce que** l'étape de sablage comprend le fait de projeter un milieu de sablage sur la surface de la au moins une pièce maintenue par le porte-pièce.

19. Procédé selon l'une quelconque des revendications 13 à 18, **caractérisé en ce que** le procédé comprend l'étape consistant à rincer (810) une surface de la au moins une pièce, et **en ce que** l'étape de rinçage comprend le fait de pulvériser un milieu de rinçage sur la surface de la au moins pièce maintenue par le porte-pièce.

20. Procédé selon l'une quelconque des revendications 13 à 19, **caractérisé en ce que** le procédé comprend l'étape consistant à sécher (812) la au moins une pièce, et **en ce que** l'étape de séchage comprend le fait de guider un milieu de séchage vers une surface de la au moins pièce maintenue par le porte-pièce.

21. Procédé selon l'une quelconque des revendications 13 à 20, **caractérisé en ce que** la au moins une pièce, qui est traitée, comprend une plaquette de coupe.
